# EUROPÄISCHE PATENTSCHRIFT

(11) **EP 1 679 444 B1**
(45) Veröffentlichungstag und Bekanntmachung des Hinweises auf die Patenterteilung: **02.07.2008**
(21) Anmeldenummer: 06000123.7
(22) Anmeldetag: 04.01.2006
(51) Int. Cl.: F16C 11/06

(54) **Anschlusseinrichtung für ein Gelenk**
Connection for a joint
Connextion pour une articulation

(30) Priorität: 11.01.2005 DE 202005000404 U
(43) Veröffentlichungstag der Anmeldung: 12.07.2006
(73) Patentinhaber: Dura Automotive Systems GmbH, 40549 Düsseldorf (DE)
(72) Erfinder: Markus, Clemens, 40885 Ratingen (DE)
(74) Vertreter: Paul, Dieter-Alfred

(56) Entgegenhaltungen:
- DE-A1- 3 346 665
- DE-A1- 10 004 936
- DE-C1- 4 102 863
- DE-U1-4202004 012 80
- FR-A1- 2 634 839

## Beschreibung

Die Erfindung betrifft eine Anschlußeinrichtung für ein Gelenk mit einem Anschlußkopf und einem Anschlußendteil für die Befestigung an einem Betätigungsorgan, wobei der Anschlußkopf einen Anschlußkäfig aufweist, in dem ein Aufnahmeorgan für die gelenkige Verbindung mit einem anzuschließenden Teil gehalten ist und wobei zwischen Anschlußkäfig und Aufnahmeorgan ein Stützring aus einem gummielastischen Material angeordnet ist, über den sich das Aufnahmeorgan an dem Anschlußkäfig zumindest in radialer Richtung des Stützrings abstützt und der wenigstens zwei konzentrische Ringelemente aufweist, die Abstand zueinander haben, wobei der Abstand durch die Ringelemente verbindende Stege überbrückt ist.

Anschlußeinrichtungen der vorgenannten Art dienen dazu, Betätigungszüge oder Betätigungsgestänge mit einem zu betätigenden Organ, z.B. ein Getriebe in Kraftfahrzeugen, zu verbinden. Sie bilden das Ende eines solchen Betätigungszuges oder Betätigungsgestänges. Ihr Anschlußkopf ist so ausgebildet, daß er mit einem komplementären Kopf an dem zu betätigenden Organ gekuppelt werden kann. In den meisten Fällen ist er als Kugelkopf ausgebildet, der in der Anschlußeinrichtung in einer entsprechenden Kugelpfanne einrastbar ist.

Um eine Übertragung von Geräuschen und Vibrationen zu vermeiden, weisen die bekannten Anschlußeinrichtungen einen Stützring aus einem gummielastischen Material auf, der zwischen Anschlußkäfig und Aufnahmeorgan angeordnet ist und über den sich das Aufnahmeorgan an dem Anschlußkäfig zumindest in radialer Richtung abstützt. Bei der Anschlußeinrichtung gemäß der DE 197 55 284 A1 weist entweder der Anschlußkäfig oder das Aufnahmeorgan eine Profilierung in Form über den Umfang verteilter Zähne auf, die an dem Stützring anliegen. Hierdurch sollen über den Umfang gleichmäßig verteilte Hohlräume geschaffen werden, in die das unter Druckspannung ausweichende Gummimaterial hineinverdrängt werden soll. Einer solchen Art von Verdrängung setzt Gummi jedoch einen erheblichen Widerstand entgegen.

Deshalb ist in der DE 102 06 085 A1 vorgeschlagen worden, den Stützring so auszubilden, daß er über Noppen an dem Aufnahmeorgan und/oder dem Anschlußkäfig anliegt, so daß eine im wesentlichen nur punkt- oder linienförmige Anlage gegeben ist. Hierdurch konnte eine bessere Entkopplung von Schallvibrationen bewirkt werden.

Die vorstehende Ausführungsform hat frühere Ausführungen eines Stützrings ersetzt, bei denen der Stützring Hülsenform mit einem H-förmigen Querschnitt hatte, also aus zwei hülsenförmigen, beabstandeten Ringelementen und einem die Ringelemente verbindenden und den Abstand überbrückenden Ringsteg bestanden. Diese Ausführungsform eines Stützrings war nicht geeignet, die auftretenden Vibrationen so zu eliminieren, daß sie nicht auf das zu betätigende Organ, beispielsweise einen Schalthebel, übertragen wurden. Eine erhebliche Verbesserung wurde allerdings durch eine Weiterentwicklung nach der DE 20 2004 012 804 U1 erziehlt, bei der ein Ringsteg schräg zur Mittelachse des Stützrings verläuft, so daß der Steg nicht mehr nur auf Druck, sondern auf Biegung beansprucht wird.

Der Erfindung liegt die Aufgabe zugrunde, eine Anschlußeinrichtung der eingangs genannten Art so auszubilden, daß sie noch besser geeignet ist, die an dem zu betätigenden Organ auftretenden Vibrationen aufzufangen, so daß sie an dem Betätigungsorgan nicht mehr wahrgenommen werden können, gleichwohl aber eine exakte Kraftübertragung zwischen beiden Organen gewährleistet.

Diese Aufgabe wird erfindungsgemäß dadurch gelöst, daß die Stege die Ringelemente über den Umfang abwechselnd in unterschiedlicher axialer Höhenanordnung verbinden. Grundgedanke der Erfindung ist es also, nicht einen über den Umfang in gleicher Höhe verlaufenden Steg vorzusehen, sondern über den Umfang abwechselnd in unterschiedlicher axialer Höhenanordnung. Es hat sich gezeigt, daß hierdurch eine wirksame Unterdrükkung von Vibrationen bei gleichzeitig exakter Kraftübertragung erzielt wird.

In Ausbildung der Erfindung ist vorgesehen, daß die Stege ihre axiale Höhenanordnung bevorzugt in gleichen Winkelabständen, z.B. alle 45°, ändern, und zwar zweckmä-ßigerweise so, daß die Stege in gleichem Abstand zu einer Mittelebene des Stützrings radial verlaufen. Vorzugsweise sollten die Stege die Ringelemente abwechselnd an dem einen und an dem anderen stirnseitigen Ende des Stützrings verbinden. Dabei ist es von vorteil, wenn die Stege bogenförmig nach außen gewölbt sind.

In der Zeichnung ist die Erfindung anhand eines Ausführungsbeispiels näher veranschaulicht. Es zeigen:
- Figur 1: eine perspektivische Ansicht der Anschlußeinrichtung;
- Figur 2: einen Längsschnitt durch die Anschlußeinrichtung gemäß Figur 1;
- Figur 3: eine Draufsicht auf den Stützring der Anschlußeinrichtung gemäß den Figuren 1 und 2;
- Figur 4: einen Querschnitt durch den Stützring gemäß Figur 3 in der Ebene A-A; und
- Figur 5: einen Querschnitt durch den Stützring gemäß Figur 3 in der Ebene B-B.

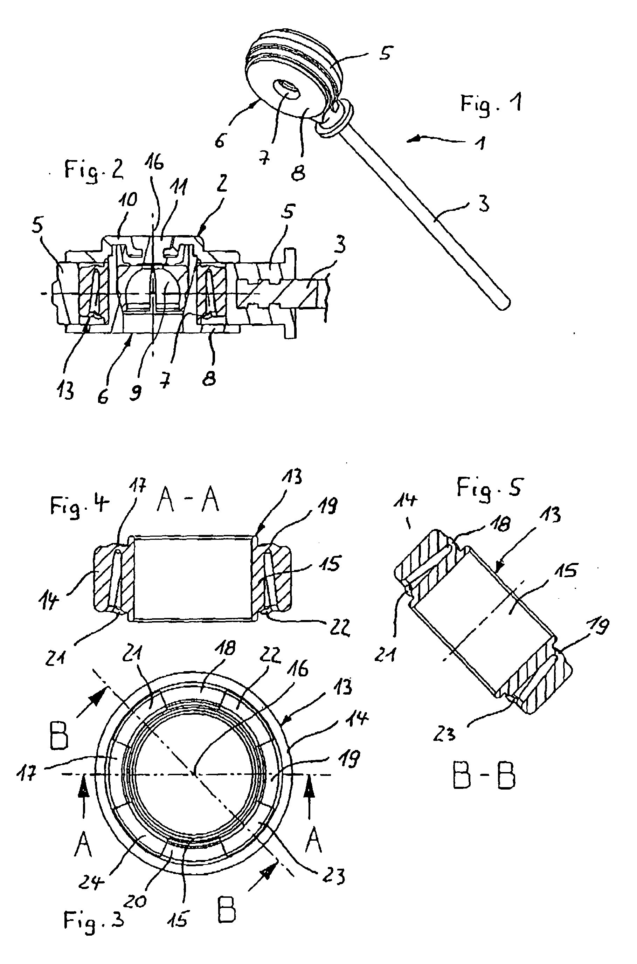

Die in den Figuren 1 und 2 dargestellte Anschlußeinrichtung 1 weist einen Anschlußkopf 2 und ein mit diesem formschlüssig verbundenes Anschlußendteil 3 auf. Das Anschlußendteil 3 besteht aus Metall und ist mit einer endseitig offenen Sackbohrung versehen, in der das Endteil eines Betätigungszuges angeschraubt oder eingepreßt werden kann.

Der Anschlußkopf 2 weist einen ringförmigen Anschlußkäfig 5 aus einem harten Kunststoff auf, der auf das mit Nuten versehene Ende des Anschlußendteils 3 aufgespritzt ist, so daß beide starr miteinander verbunden sind. Der Anschlußkäfig 5 umgibt ein Aufnahmeorgan 6, das der Verbindung mit dem zu betätigenden, d.h. anzuschließenden Teil dient. Das Aufnahmeorgan 6 ist zweiteilig aufgebaut. Es hat einen Ringkörper 7, der innerhalb des Anschlußkäfigs 5 Hülsenform und anschlußseitig einen flanschartigen Kragen 8 hat. In dem Ringkörper 7 ist eine Kugelpfanne 9 angeordnet, die zur Anschlußseite hin offen ist und für die Aufnahme eines passenden Kugelkopf bestimmt ist. In der gezeigten Darstellung sitzt die Kugelpfanne 9 in einem konisch gestalteten Abschnitt des Ringkörpers 7.

Der Ringkörper 7 wird obenseitig durch einen Deckel 10 geschlossen, der auf den Ringkörper 7 aufgeschraubt, aufgeklebt oder verclipst ist. Der Deckel 10 weist ein Federelement 11 aus einem thermoplastischen Kautschuk auf, das an der Oberseite der Kugelpfanne 9 anliegt. Auf diese Weise kann die Kugelpfanne 9 in axialer Richtung nach oben ausweichen, wenn ein passender Kugelkopf in die Kugelpfanne 9 eingedrückt werden soll. Sie gelangt hierdurch in einen erweiterten Bereich des Ringkörpers 7, so daß der untere Öffnungsrand der Kugelpfanne 9 nicht mehr außenseitig geführt ist und auf diese Weise leicht aufweitbar ist. Nach Einschnappen des Kugelkopfs wird die Kugelpfanne 9 durch das Federelement 11 wieder in die gezeigte Stellung gedrückt, in der sie allseitig an dem Ringkörper 7 anliegt und deshalb nicht mehr aufgeweitet werden kann. Der einmal eingeschnappte Kugelkopf kann somit nicht mehr nach unten herausgezogen werden.

Zwischen der Außenseite des Ringkörpers 7 und der Innenseite des Anschlußkäfigs 5 ist ein Stützring 13 aus einem gummielastischen Material, beispielsweise thermoplastischem Kautschuk, angeordnet. In axialer Richtung wird der stützring 13 einerseits von dem Kragen 8 des Ringkörpers 7 und andererseits von dem Deckel 10 eingefaßt. Kragen 8 und Deckel 10 stehen radial so weit über, daß sie sich an dem Anschlußkäfig 5 abstützen, so daß das Aufnahmeorgan 6 axial unbeweglich in dem Anschlußkopf 2 gehalten wird und der Stützring 13 allseitig eingefaßt ist.

Die besondere Ausbildung des in Figur 2 zu erkennenden Stützrings 13 ergibt sich aus den Figuren 3 bis 5. Der Stützring 13 weist zwei hülsenförmige Ringelemente 14, 15 auf, die konzentrisch um eine Mittelachse 16 angeordnet sind. Dabei ist das äußere Ringelement 14 in axialer Richtung kürzer ausgebildet als das innere Ringelement 15, so daß das innere Ringelement 15 oben- und untenseitig über das äußere Ringelement 14 vorsteht.

Die beiden Ringelemente 14, 15 haben in radialer Richtung Abstand zueinander. Der Abstand wird obenseitig über vier Stegelemente 17, 18, 19, 20 und untenseitig über ebenfalls vier Stegelemente 21, 22, 23, 24 überbrückt. Dabei sind die obenseitigen Stegelemente 17, 18, 19, 20 nach oben und die untenseitigen Stegelemente 21, 22, 23, 24 nach unten gewölbt. Jeweils ein obenseitiges Stegelement 17, 18, 19, 20 wechselt sich mit einem untenseitigen Stegelement 21, 22, 23, 24 in der Weise ab, daß sie sich jeweils über in diesem Fall 45° des Umfangs des Stützrings 13 erstrecken und dabei so gegeneinander versetzt sind, daß sich jeweils ein obenseitiges Stegelement 17, 18, 19, 20 an ein untenseitiges Stegelement 21, 22, 23, 24 anschließt. Die Dicke der Stegelemente 17 bis 24 ist dabei so bemessen, daß Vibrationen wirksam aufgefangen werden.

Wie aus Figur 2 zu ersehen ist, wird nur das innere Ringelement 15 zwischen Deckel 10 und Kragen 8 axial unverrückbar gehalten. Da das äußere Ringelement 14 kürzer ist, kann es sich in axialer Richtung bewegen. Durch die symmetrische und wechselseitige Anordnung der Stegelemente 17 bis 24 werden jedoch axiale Bewegungen weitestgehend vermieden.

## Patentansprüche

1. Anschlußeinrichtung (1) für ein Gelenk mit einem Anschlußkopf (2) und einem Anschlußendteil (3) für die Befestigung an einem Betätigungsorgan, wobei der Anschlußkopf (2) einen Anschlußkäfig (5) aufweist, in dem ein Aufnahmeorgan (6) für die gelenkige Verbindung mit einem anzuschließenden Teil gehalten ist, und wobei zwischen Anschlußkäfig (5) und Aufnahmeorgan (6) ein Stützring (13) aus einem gummielastischen Material angeordnet ist, über den sich das Aufnahmeorgan (6) an dem Anschlußkäfig (5) zumindest in radialer Richtung des Stützrings (13) abstützt und der wenigstens zwei konzentrische Ringelemente (14, 15) aufweist, die Abstand zueinander haben, welcher durch die Ringelemente (14, 15) verbindende Stege (17) überbrückt ist, **dadurch gekennzeichnet, daß** die Stege (17 bis 24) die Ringelemente (14, 15) über den Umfang abwechselnd mit unterschiedlicher axialer Höhenanordnung verbinden.

2. Anschlußeinrichtung nach Anspruch 1, **dadurch gekennzeichnet, daß** die Stege (17 bis 24) ihre Höhenanordnung in gleichen Winkelabständen ändern.

3. Anschlußeinrichtung nach Anspruch 1 oder 2, **dadurch gekennzeichnet, daß** die Stege (17 bis 24) im gleichen Abstand zu einer Mittelebene des Stützrings (13) radial verlaufen.

4. Anschlußeinrichtung nach einem der Ansprüche 1 bis 3, **dadurch gekennzeichnet, daß** die Stege (17 bis 24) die Ringelemente (14, 15) abwechselnd an dem einen und an dem anderen stirnseitigen Ende des Stützrings (13) verbinden.

5. Anschlußeinrichtung nach Anspruch 4, **dadurch gekennzeichnet, daß** die Stege (17 bis 24) bogenförmig nach außen gewölbt sind.

## Claims

1. Connection device (1) for a link with a connection head (2) and a connection end-section (3) for attachment to a control member, whereby the connection head (2) has a connection spacer (5), in which an uptake member (6), for articulated connection to an adjoining part, is held, and whereby an elastic rubber support ring (13), by means of which the uptake member (6) is supported, at least in a radial direction of the support ring (13), on the connection spacer (5), is disposed between the connection spacer (5) and the uptake member (6), the elastic, rubber support ring also having at least two concentric annular elements (14, 15) that have a separation between them that is bridged by the crosspieces (17 to 24) that connect the annular elements (14, 15), **characterized in that** the crosspieces (17 to 24) connect the annular elements (14, 15), over the periphery, in an arrangement of alternately varying height.

2. Connection device in accordance with claim 1, **characterized in that** the crosspieces (17 to 24) vary in their height arrangement at equal angular separations.

3. Connection device in accordance with claims 1 or 2, **characterized in that** the crosspieces (17 to 24) run radially at equal separation from a central plane of the support ring (13).

4. Connection device in accordance with one of claims 1 to 3, **characterized in that** the crosspieces (17 to 24) connect the annular elements (14, 15) on the one and the other end face of the support ring (13).

5. Connection device in accordance with claim 4, **characterized in that** the crosspieces (17 to 24) arch outwards in the form of an arc.

## Revendications

1. Dispositif de raccordement (1) pour une articulation avec une tête de raccordement (2) et une pièce d'extrémité de raccordement (3) pour la fixation à un organe d'actionnement, la tête de raccordement (2) présentant une cage de raccordement (5), dans laquelle est maintenu un organe de réception (6) pour la liaison articulée avec une pièce à raccorder et une bague d'appui (13) en un matériau élastique étant disposée entre la cage de raccordement (5) et l'organe de réception (6), par le biais de laquelle bague l'organe de réception (6) s'appuie sur la cage de raccordement (5) au moins dans le sens radial de la bague d'appui (13) et qui présente au moins deux éléments annulaires (14, 15) concentriques, qui sont espacés l'un de l'autre d'une distance, qui est franchie par des entretoises (17) reliant les éléments annulaires (14, 15), **caractérisé en ce que** les entretoises (17 à 24) relient les éléments annulaires (14, 15) sur la périphérie en alternance avec un agencement en hauteur axial différent.

2. Dispositif de raccordement selon la revendication 1, **caractérisé en ce que** les entretoises (17 à 24) modifient leur agencement en hauteur suivant les mêmes distances angulaires.

3. Dispositif de raccordement selon la revendication 1 ou 2, **caractérisé en ce que** les entretoises (17 à 24) s'étendent radialement à égale distance d'un plan médian de la bague d'appui (13).

4. Dispositif de raccordement selon l'une quelconque des revendications 1 à 3, **caractérisé en ce que** les entretoises (17 à 24) relient les éléments annulaires (14, 15) en alternance à l'une et à l'autre extrémité frontale de la bague d'appui (13).

5. Dispositif de raccordement selon la revendication 4, **caractérisé en ce que** les entretoises (17 à 24) sont convexes en forme d'arc.
